# EUROPEAN PATENT SPECIFICATION

(11) **EP 3 490 191 B1**
(45) Date of publication and mention of the grant of the patent: **15.01.2020**
(21) Application number: 17203081.9
(22) Date of filing: 22.11.2017
(51) Int. Cl.: H04L 9/32, G06Q 20/06, G06Q 20/40

(54) **PROCESSING METHOD OF SERVICE REQUESTS PERFORMED BY A SERVICE PROVIDER NODE**
VERFAHREN ZUR VERARBEITUNG VON DURCH EINEN DIENSTANBIETERKNOTEN AUSGEFÜHRTEN DIENSTANFORDERUNGEN
PROCÉDÉ DE TRAITEMENT DE DEMANDES DE SERVICE EFFECTUÉES PAR UN NOEUD DE FOURNISSEUR DE SERVICES

(43) Date of publication of application: 29.05.2019
(73) Proprietor: Siemens Aktiengesellschaft, 80333 München (DE)
(72) Inventor: Kirchner, Michael, 81737 München (DE); Vamos, Benedikt, 85579 Neubiberg (DE)

(56) References cited:
- WO-A1-2017/145018
- US-A- 5 715 314
- US-A1- 2015 278 397
- Maximilian Golla ET AL: ""I want my money back!" Limiting Online Password-Guessing Financially", Symposium on Usable Privacy and Security (SOUPS) 2017, 14 July 2017 (2017-07-14), pages 1-6, XP055444957, Santa Clara, California Retrieved from the Internet: URL:https://www.usenix.org/system/files/wa y2017-golla.pdf [retrieved on 2018-01-26]

## Description

### TECHNICAL FIELD

Various embodiments of the invention relate to a controlled processing of service requests in an IT-based environment by taking into account a correlation of service requests and financial deposits concerning the respective service requests.

### BACKGROUND

IT-based services are used by many users. Most users have a legitimate interest in using such services, while others harmfully intend to overload such a service, e.g., in order to trigger collapse of such a service. As an example, Denial-of-service (DoS) attacks may be used to overload such an IT-based service due to a huge plurality of requests, which result in an immoderate processing effort.

Various kinds of Denial of Service attacks are known. Generally, an attacker sends multiple service requests to a service provider node to cause overload and prevent the service provider node from processing legitimate service requests. An attacker may improve the efficiency of the attack by creating service requests that require little or limited processing power at the originator, but require significant processing power at the service provider node. Alternatively or additionally, a large count of service requests can be generated and remitted in parallel, e.g., using a plurality of originating nodes. Using Denial of Service attacks, the service provider node can be congested and overload can be caused. Often, an attacker may use the situation that remitting service requests requires fewer computational resources if compared to processing service requests.

Various techniques are known in order to protect processing of service requests against Denial of Service attacks. For example, additional hardware resources may be provided. This, however, is costly and requires additional administrative work. Thus, scalability is limited and, typically, even large-scale hardware resources can be overloaded when an attack is using a plurality of nodes for remitting service requests.

A further technique implements a service provider node using cloud-based computational resources. Then, in case of a Denial of Service attack, additional hardware resources can be dynamically provisioned to process all service requests. However, also such a technique is costly, in particular where the additional hardware resources are dynamically allocated. Thresholds for additional hardware resources are often required in order to avoid unexpected costs.

A still further technique requires caching- /proxy providers for minimizing the service requests that have to be processed by the service provider node. However, such an approach has limited efficiency if an attacker requests dynamic content. Dynamic content, typically, has to be processed by the service provider node and cannot be remanded to caching-/proxy providers. Furthermore, sometimes an attacker may have knowledge on the address of the service provider node and may therefore transmit service requests directly to the service provider node, thereby circumnavigating any caching- /proxy providers.

WO 2017/145018 A1 discloses a secure method for exchanging entities via a blockchain. Hereby, tokenization techniques and techniques for embedding metadata in a redeem script of a blockchain transaction are included. The method comprises generating a first script, the first script comprising: a first set of metadata associated with a first invitation for the exchange of a first entity by a first user, the first set of metadata comprising an indication of the first entity to be offered for exchange and a first location condition for the exchange, a first user public key (P1A) associated with the first user, wherein the first user public key (P1A) is part of an asymmetric cryptographic pair comprising the first user public key (P1A) and a first user private key (V1A). XP055444957 discloses a deposit-based rate-limiting approach that requires a deposit before one is able to login, to facilitate denial of service attacks. After paying, the actual authentication procedure take place, i.e,, by entering a password. Honest users can expect an immediate refund after the login succeeded. In contrast, malicious attempts are not refunded. Such systems rely on micropayment technologies, such as blockchain-based payment systems that offer the ability to close smart contracts. The system disclosed by this document also can respect concurrent logins: you can have as many simultaneous login attempts as you like, but each will require another deposit and the price can be adjusted accordingly.

### SUMMARY

Therefore, in order to provide a reliable, customer-oriented IT service, there is a need to control processing of IT-based service requests. Specifically, there is a need of protecting processing of service request against DoS attacks.

It is an object to provide a method for processing of service requests in a controlled and reliable manner.

A method and a service provider node according to the independent claims are provided. Further embodiments are defined in the dependent claims.

According to an embodiment, a method for processing of service requests by a service provider node is disclosed. The method comprises receiving a first service request, which is remitted by a user. The method further comprises receiving first control data indicative of a first financial deposit, which is remitted by the user, wherein the first control data is referenced to at least one service request. The method further comprises processing the received first service request, if the received first control data is referenced to the received first service request. The method further comprises dispensing a third control data indicative of a third financial deposit to the user in response to receiving the first control data and based on an evaluation of a user criterion, wherein the user criterion includes behaviors of the user, and the method further comprises analyzing the behaviours of the user.

Such an approach is based on the fact that the operational point of time for processing a service request remitted or provided by a user may be controlled using control data related to a financial deposit of the respective service request. The controlled processing of service requests may be admitted when a financial deposit concerning or associated with the respective service request is remitted or executed by the user. Therefore, the method provides reliable services including protection against fraud including Denial of Service attacks. By requesting a financial deposit before processing a service request, Denial of Service attacks can be effectively mitigated service processing is protected by requiring the financial deposit. Additionally, the dispensing of the third control data enables a refund of financial efforts to a user based on the specifications of the respective user. As an example, a refund of financial efforts of a user may be correlated with the legitimacy of a user for performing the service. Financial incentives may be provided, which may enable not to misapply such a service, wherein on the other hand, legitimated users may be reimbursed and may therefore be able to use the service in a preferably cost-efficient manner.

According to another embodiment, a service provider node adapted to process service requests is disclosed. Hereby, the service provider node comprises a control unit, which is adapted to receive a first service request, which is remitted by a user. The control unit is further adapted to receive a first control data indicative of a first financial deposit, which is remitted by the user, wherein the first control data is referenced to at least one service request. The control unit is further adapted to process the received first service request, if the received first control data is referenced to the received first service request. The control unit is further adapted to dispense a third control data indicative of a third financial deposit to the user in response to receive the first control data and based on an evaluation of a user criterion, wherein the user criterion includes behaviors of the user, and the method further comprises analyzing the behaviours of the user.

Such an approach enables the implementation of preferably simple technical means to perform the method outlined above in a reliable manner.

A service request within the meaning of the present disclosure may refer to any user-based inquiry which may intend the provision of a certain service. Such a service may relate to an IT-based service, e.g. a call of a web page sensor control, actuator control, Application Interface (API) access, HTTP GET or POST transactions, etc. The service request may be remitted by a user, i.e. triggered and received from a user.

A service provider node within the meaning of the present disclosure may refer to any device, which is adapted to provide IT based services. The service provider node may be adapted to receive service requests and control data indicative of a financial deposit. The service provider node may also be adapted to provide a financial deposit. The service provider node may also be adapted to dispense control data indicative of a financial deposit. The service provider node may also be adapted to dispense a financial deposit. The service preorder node may be implemented by a server.

A financial deposit within the meaning of the present disclosure may refer to a transaction of any financial value transferred from a first location to a second location or from a first holder to a second holer. The first location and/or the second location may be accessible to a user. The first location and/or the second location may also be accessible to a service provider.

In an embodiment of the method, the method further comprises storing the received first control data, if the received first control data is not referenced to the received first service request. Hence, it is possible that processing of the service request is delayed. In another embodiment of the method, receiving the first service request is performed after receiving the first control data.

Thereby, the method further enables prepayments for services. The method therefore provides for a preferably flexible and user-friendly demand of services with costs.

In another embodiment of the method, receiving the first service request and receiving the first control data is performed simultaneously.

Thereby, since these transactions may be performed in a single shot, the method enables a preferably quick and simple processing of services protected by the financial deposits.

In another embodiment of the method, the method further comprises receiving a second service request, which is remitted by the user. Hereby, the method further comprises receiving a second control data indicative of a second financial deposit, which is remitted by the user, wherein the second control data is referenced to the at least one service request. This method further comprises processing the received second service request, if the received second control data is referenced to the received second service request. Hereby, receiving the second service request and receiving the second control data is performed simultaneously. Further, receiving the first control and the second control data is enabled by a token dispensed from the service provider node to the user in response to a collective financial transfer performed by the user to the service provider node.

Thereby, processing of a plurality of service request may be performed, wherein only a single financial transaction of a user has to be remitted. Thus, the method may reduce efforts dedicated by the user. Therefore, an improved user-friendliness may be achieved.

In another embodiment of the method, the user criterion includes at least one of a) at least one service request remitted by the user, b) at least one login attempt of the user and c) financial resource information of the user.

Based on a), the behavior of the user concerning his requests for using a service may be analyzed in order to check whether such a user may be legitimated to use the respective service. Hereby, the type of request, the point of time of such a request, variances with respect to the type of request as well as time difference in between two request may be analyzed in order to reliably examine the legitimacy of the respective user for using this service.

Based on b), success with respect to login attempts of the respective service may be analyzed in order to reliably examine whether such a user is legitimated for using this service.

Based on c), characteristics of an IT-based wallet of a user may be taken into consideration in order to evaluate whether such a user may be legitimated to use the respective service. Hereby, the amount of financial resources deposited in the wallet, dynamics concerning these financial resources and the time of existence of such a wallet may be taken into account, in order to reliably examine the legitimacy of the respective user for using this service.

In another embodiment of the method, the first control data and the third control data are identical.

Thereby, it may be enabled that a user fulfilling the user criterion may completely be reimbursed from the remitted financial effort. The method may therefore provide for a charge-free service in case that a user is legitimately using the respective service.

In another embodiment of the method, the method further comprises dispensing a fourth control data indicative of a fourth financial deposit to the user in response to receiving the second control data based on an evaluation of at least one user criterion, wherein dispensing the third control data and the fourth control data is performed simultaneously.

Thereby, various reimbursements to a user fulfilling a certain user criterion, e.g. due to his evaluated legitimation for the respective service, may be executed contemporaneously. Thereby, the number of transactions in between the service provider node and the respective use may be reduced; thus an improved efficiency of the method is achieved.

In another embodiment of the method, receiving the first service request and receiving the first control data is enabled by a data transfer using a distributed database.

Thereby, the method is configured more flexibly.

In another embodiment of the method, receiving the first service request and receiving the first control data is enabled by a data transfer using a database based on a distributed ledger technology such as blockchain technology and/or a Directed Acyclic Graph.

A distributed ledger technology may be characterized by replicated, shared, and/or synchronized digital data that is reproduced at multiple sites. There may be no centralized control.

Using such a decentralized database, data originating from different users may be processed at a high security level.

In another embodiment of the method, the use of the database based on distributed ledger technology includes accessing a Smart Contract service.

Using these means, the processing power of the respective method may be reduced. Thus, an improved efficiency of the respective method may be achieved.

In an embodiment of the method, receiving the first service request and receiving the first control data is enabled by a data transfer using a database based on Directed Acyclic Graph.

Such an approach may e.g. be based on IOTA and may enable fast processing of service requests, in particular in case that service requests are remitted by a large count of users.

In another embodiment of the service provider node, the service provider node is adapted to perform the method according to any of the embodiments outlined above.

Such an approach enables the implementation of preferably simple technical means to perform any of the methods outlined above in a reliable manner.

A token within the meaning of the present disclosure may refer to any data object which is adapted to operate as an agent for supporting an IT-based trading. Such a token may be provided to a user as a trade-off compensating a financial transfer performed by the user. Such a token may enable the operation of IT-based services with costs. The token may also enable a plurality of such operations. The token may include unique checksums.

A collective financial transfer within the meaning of the present disclosure may refer to any single financial transfer, which is operated to achieve a plurality of trade-offs. Such a financial transfer may be IT-based. A user, who intends to use an IT-based service, may perform such a financial transfer.

A distributed database within the meaning of the present disclosure may refer to any database in which storage devices are not all attached to a common processor. Instead, they may be stored in multiple computers, located in the same physical location or may be dispersed over a network of interconnected computers.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
Figure 1 schematically illustrates a processing network according to various examples, which is adapted for interaction of a plurality of users and a service provider node.
Figure 2 represents a flowchart of a processing method of service requests by a service provider node according to various examples.
Figure 3 represents a flowchart of another processing method of service requests by a service provider node according to various examples.
Figure 4 schematically illustrates a signaling diagram of a user and a service provider node according to various examples.
Figure 5 schematically illustrates another signaling diagram of a user and a service provider node according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of processing service requests are described. Specifically, techniques of protecting said processing of the service requests against Denial of Service attacks are described.

According to various embodiments, this involves use of financial deposits - e.g., facilitated by block chain technology, micro-transactions, and/or smart contracts.

It is, e.g., possible to accompany a service request with a financial deposit. Processing of the service requires remittance of the financial deposit. Thereby, illegitimate service requests may be penalized by loss of the financial deposit. Such techniques are based on the finding that, in particular, Denial of Service attacks are typically implemented using a large count of service requests; such that the aggregated financial penalty may effectively prevent the Denial of Service attack. The high security level of distributed ledger technology such as blockchain technology may be used to protect the processing of the service requests.

If a legitimate service request is identified, it would be possible to reimburse any previously remitted financial deposit. A legitimate user can be identified based on behavior, a successful login, variances in the service request or based on a blockchain wallet. For example, it could be determined how long the block chain wallet has been in existence, whether it has a positive balance, etc,. In an example, an analysis of the behavior includes: during use of a service it is recorded which resources have been accessed by the user and what time offsets are between access to the various resources. If, for example, during the entire use of the service the same resources accessed over and over, and there are only a few milliseconds between the different accesses, then there is a large possibility that the use of the resources related to illegitimate service requests triggered, e.g., by an automatic script and not by human behavior.

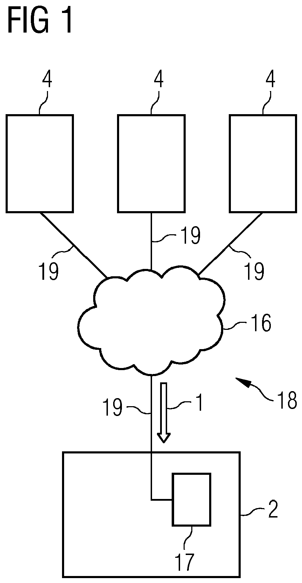

Figure 1 schematically illustrates a processing network 18 according to various examples, which is adapted for interaction of a plurality of users 4 and a service provider node 2. Interaction of the plurality of user 4 and the service provider node 2 via data lines 19 may either be implemented in a direct manner (not depicted in Figure 1), or may be implemented via a database 16 collecting data of the respective user 4 in an organized manner. Hereby, a distributed database or a database 16 based on blockchain technology may be used, or, generally, another kind of distributed ledger technology. With respect to the latter, it is also intended to include operation according to a Smart Contract service. Further, the database 16 may also operate based on Directed Acyclic Graph, such as IOTA. The service provider node may comprise a control unit 17, which may be adapted to perform a processing method 100, 200 according to various examples of the present disclosure. For doing so, any service request 1 may be remitted by a user 4 and may then be received for processing the service provider node 2.

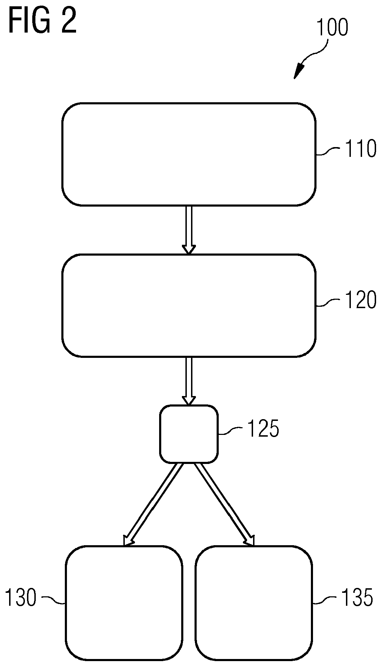

Figure 2 represents a flowchart of a processing method 100 of service requests 1 by a service provider node 2 according to various examples.

At 110, the service provider node 2 may receive first control data 5 indicative of a first financial deposit 6, which may be remitted by the user 4. Hereby, the first control data may be referenced to at least one service request 1.

At 120, the service provider node 2 may receive a first service request 1, which may be remitted by the user 4. Hereby, receiving 120 the first service request 1 may be performed after receiving 110 the first control data 5. However, it is also intended that receiving 120 the first service request 1 and receiving 110 the first control data 5 may be performed simultaneously.

At 125, the service provider node 2 may investigate whether the received first control data 5 can be referenced to or associated with the received fist service request 1. Hence, it can be checked if the at last one service request associated with the first control data watches the first service request. For example, checksums or tokes may be determined and compared. Links between the first control data 5 and the first service request may be checked. If the received first control data 5 may be referenced to the received first service request 3, the received first service request 3 may be processed 130 by the service provider node 2. Otherwise, the service provider node 2 may or may not store 135 the received first control data 5.

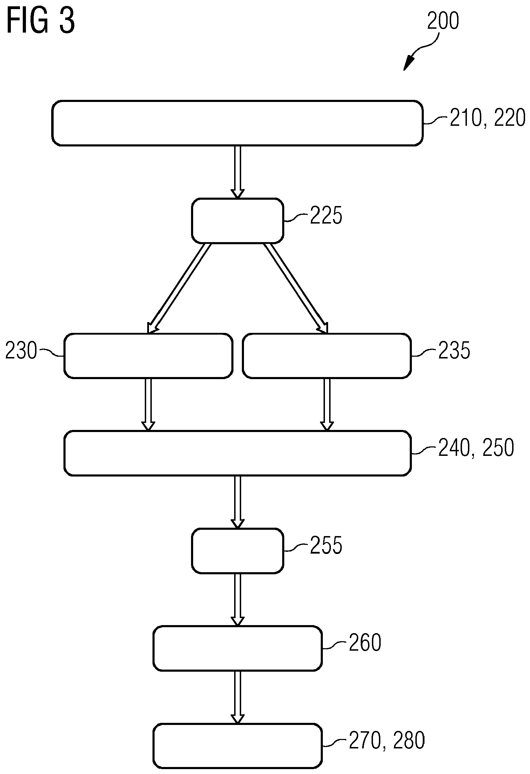

Figure 3 represents a flowchart of another processing method 200 of service requests 1 by a service provider node 2 according to various examples.

At 210, the service provider node 2 may receive first control data 5 indicating of a first financial deposit 6, which may be remitted by the user 4. Hereby, the first control data may be referenced to at least one service request 1.

At 220, the service provider node 2 may receive a first service request 3, which may be remitted by the user 4. As can be deduced from Figure 3, it may be intended that receiving 220 the first service request 3 and receiving 210 the first control data 5 may be performed simultaneously.

At 225, the service provider node 2 may investigate whether the received first control data 5 can be referenced to the received fist service request 3. If the received first control data 5 can be referenced to the received first service request 3, the received first service request 3 may be processed 230 by the service provider node 2. Otherwise, the service provider node 2 may or may not store 235 the received first control data 5.

At 240, the service provider node 2 may receive 240 a second control data 8 indicative of a second financial deposit 9, which may be remitted by the user 4, wherein the second control data 8 may be referenced to the at least one service request 1. Hereby, receiving 210, 240 the first control data 5 and the second control data 8 may be enabled by a token 10 dispensed from the service provider node 2 to the user 4 in response to a collective financial transfer 11 performed by the user 4 to the service provider node.

At 250, the service provider node 2 may receive 250 a second service request 7, which may be remitted by the user 4. Hereby, receiving 250 the second service request 7 by the service provider node 2 and receiving 240 the second control data 8 by the service provider node 2 may be performed simultaneously.

At 255, the service provider node 2 may investigate whether the received second control data 8 can be referenced to the received second service request 7.

At 260, the received second service request 7 may be selectively processed by the service provider node 2, if the received second control data 8 can be referenced to the received second service request 7.

At 270, the service provider node 2 may dispense a third control data 12 to the user 4. Such a third control data 12 may be indicative of a third financial deposit 13. Hereby, dispensing the third control data 12 may be performed in response to receiving 210 the first control data 5 based on an evaluation of a user criterion. Such a user criterion may include at least one of a) at least one service request 1 remitted by the user 4, b) at least one login attempt of the user 4 and c) financial resource information of the user 4. The first control data 5 and the third control data 12 may be identical: The respective financial deposits may be balanced.

At 280, the service provider node 2 may dispense a fourth control data 14 to the user 4. Hereby, the fourth control data 14 may be indicative of a fourth financial deposit 15. The fourth control data 14 may be dispensed in response to receiving 240 the second control data 8 based on an evaluation of at least one user criterion. Hereby, dispensing 270, 280 the third control data 12 and the fourth control data 14 may be performed simultaneously.

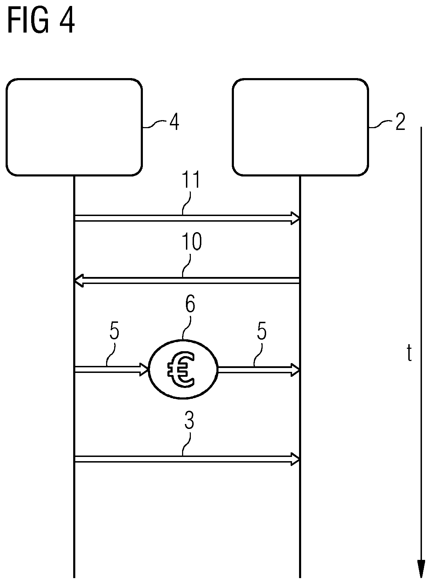

Figure 4 schematically illustrates a signaling diagram of a user 4 - i.e., a user device such as a computer, smartphone, laptop, etc. - and a service provider 2 node according to various examples. The signaling explained herein may or may not be performed in a processing network 18 according to Figure 1. Signaling explained herein is depicted over an arbitrary time scale.

At first, a collective financial transfer 11 may be transferred from the user 4 to the service provider node 2. For trade-off reasons, the service provider node 2 may subsequently transfer a token 10 to the user 4. Such a token 10 may be used by the user 4 to remit first control data 5 for transferring to the service provider node 2, wherein this first control data 5 are indicative of a first financial deposit 6. Simultaneously or subsequently, the user 4 may remit the transfer of a first service request 3 to the service provider node 2.

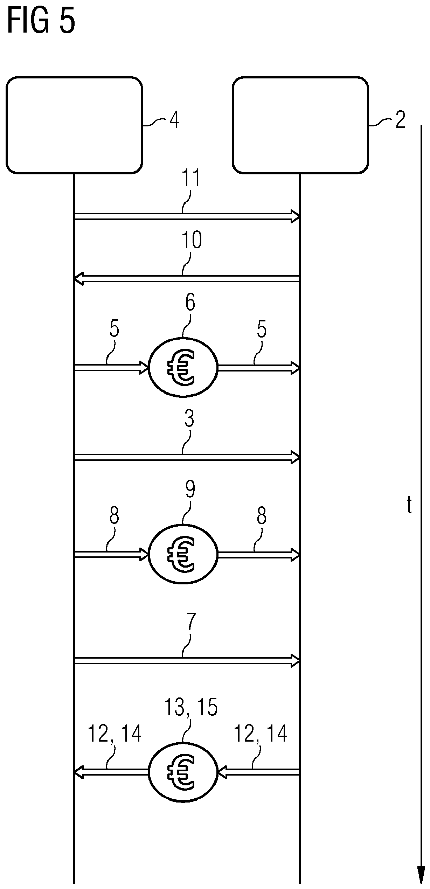

Figure 5 schematically illustrates another signaling diagram of a user 4 and a service provider node 2 according to various examples. The signaling explained herein may or may not be performed in a processing network 18 according to Figure 1. Signaling explained herein is depicted over an artificial time scale.

At first, a collective financial transfer 11 may be transferred from the user 4 to the service provider node 2. For trade-off reasons, the service provider node 2 may subsequently transfer a token 10 to the user 4. Such a token 10 may be used by the user 4 to remit first control data 5 for transferring to the service provider node 2, wherein this first control data 5 are indicative of a first financial deposit 6. Simultaneously, the user 4 may remit the transfer of a first service request 3 to the service provider node 2. Such a token 10 may also be used by the user 4 to remit second control data 8 for transferring to the service provider node 2, wherein this second control data 8 are indicative of a second financial deposit 9. Simultaneously, the user 4 may remit the transfer of a second service request 7 to the service provider node 2. The service provider node 2 may then dispense a third control data 12 indicative of a third financial deposit 13 to the user 4 based on an evaluation of a user criterion as well as a fourth control data 14 indicative of a fourth financial deposit 15 to the user 4 based on an evaluation of at least one user criterion. Hereby, dispensing the third control data 12 and the fourth control data 14 may be performed simultaneously.

Summarizing, above, various techniques of protecting processing of service requests against Denial of Service attacks by requiring accompanying financial deposits have been described. Various examples of implementation are possible.

For example, a user may remit a certain financial deposit within the block chain and, thereby, acquire a token. The token can then be used to remit a number of service requests to the service provider node. If during use of the service the user is identified as being legitimate, the remitted financial deposit can be reimbursed; if, however, the user is identified as being illegitimate, the remitted financial deposit can be locked and not be reimbursed.

In a further example, a user initially transmits the address of a bitcoin wallet to the service provider node. The service provider node can then create a user session being bound to or associated with that address of the wallet. During the user session the user remits prior to or substantially contemporaneously with each service request a financial deposit in the block chain, e.g., a few cents or dollars. The service provider node processes a service only if the respective financial deposit has been remitted and received. If the user is identified as being legitimate, the financial deposit can be reimbursed; or otherwise locked. In such an implementation the available attack vectors for denial of service attacks are effectively reduced to the initial request; the initial request can be implemented resource-efficiently and supported by sufficient computational resources. For avoiding intentional spam for creation of a large count of user sessions having randomized addresses of wallets, a proof can be required from the user that he/she is the legitimate owner of the wallet; such a proof can be implemented using a signed message from the respective address, or otherwise.

In yet a further example, a smart contract is implemented as an interface to the service provider node. A user accesses the service provider node via the smart contract and, for each service request, remits an accompanying financial deposit. Smart contracts enable, by design, to be only executed if a certain accompanying financial deposit has been remitted. Smart contracts are processed and executed from an associated block chain network which is typically in possession of more computational resources if compared to the service provider node or an attacker. The security of the block chain network is based on the fact that no attacker has the possibility to provide more than 50% of the total computational resources.

Thus, the various techniques are based on the finding that it is possible to impose any financial damage caused by a Denial of Service attack on the attacker. Thus, costs at the service provider are avoided. The techniques described herein thus effectively protect processing of service request against Denial of Service attacks. The techniques described herein are easily implemented in the provisioning of a service. It is not required to provide a third party node. By its underlying design, the techniques described herein are powerful and service continuity is insured. They are transparent, because smart contracts and coin-based financial deposits can be verified by the public and provide a large level of security. For example, any reimbursement of previously remitted financial deposits can be associated with the smart contract such that the claim can be easily enforced by the legitimate user.

## Claims

1. A method (100, 200) for processing of service requests (1) by a service provider node (2), the method (100, 200) comprising:
Receiving (120, 220) a first service request (3), which is remitted by a user (4);
Receiving (110, 210) first control data (5) indicative of a first financial deposit (6), which is remitted by the user (4), wherein the first control data (5) is referenced to at least one service request (1); and
Processing (130, 230) the received first service request (3), if the received first control data (5) is referenced to the received first service request (3);
wherein the method (100, 200) is **characterized by**:
Dispensing (270) a third control data (12) indicative of a third financial deposit (13) to the user (4) in response to receiving (110, 210) the first control data (5) and based on an evaluation of a user criterion,
wherein the user criterion includes behaviors of the user (4), and the method (100, 210) further comprises analyzing the behaviors of the user (4).

2. The method (100, 200) of claim 1, further comprising storing (135, 235) the received first control data (5), if the received first control data (5) is not referenced to the received first service request (3).

3. The method (100, 200) of any of claims 1 and 2, wherein receiving (120, 220) the first service request (3) is performed after receiving (110, 210) the first control data (5).

4. The method (100, 200) of any of claims 1 and 2, wherein receiving (120,220) the first service request (3) and receiving (110, 210) the first control data (5) is performed simultaneously.

5. The method (100, 200) of claim 4, further comprising
Receiving (250) a second service request (7), which is remitted by the user (4);
Receiving (240) second control data (8) indicative of a second financial deposit (9), which is remitted by the user (4), wherein the second control data (8) is referenced to the at least one service request (1); and
Processing (260) the received second service request (7), if the received second control data (8) is referenced to the received second service request (7),
wherein receiving (250) the second service request (7) and receiving (240) the second control data (8) is performed simultaneously, and
wherein receiving (110, 210, 240) the first control data (5) and the second control data (8) is enabled by a token (10) dispensed from the service provider node (2) to the user (4) in response to a collective financial transfer (11) performed by the user (4) to the service provider node (2).

6. The method (200) of any of claims 1 to 5, wherein the user criterion includes at least one of a) at least one service request (1) remitted by the user (4), b) at least one login attempt of the user (4) and c) financial resource information of the user (4).

7. The method (200) of any of claims 1 to 6, wherein the first control data (5) and the third control data (12) are identical.

8. The method (200) of claim 5, further comprising dispensing (280) fourth control data (14) indicative of a fourth financial deposit (15) to the user (4) in response to receiving (240) the second control data (8) based on an evaluation of at least one user criterion, wherein dispensing (270, 280) the third control data (12) and the fourth control data (14) is performed simultaneously.

9. The method (100, 200) of any of the preceding claims, wherein receiving (120, 220) the first service request (3) and receiving (110, 210) the first control data (5) is enabled by a data transfer using a distributed database.

10. The method (100, 200) of any of claims 1 to 8, wherein receiving (120, 220) the first service request (3) and receiving (110, 210) the first control data (5) is enabled by a data transfer using a database (16) based on distributed ledger technology.

11. The method (100, 200) of claim 10, wherein the use of the database (16) based on distributed ledger technology includes accessing a Smart Contract service.

12. The method (100, 200) of any of claims 1 to 8, wherein receiving (120, 220) the first service request (3) and receiving (110, 210) the first control data (5) is enabled by a data transfer using a database (16) based on Directed Acyclic Graph.

13. A service provider node (2) adapted to process service requests (1) and comprising a control unit (17), which is adapted to:
Receive a first service request (3), which is remitted by a user (4);
Receive a first control data (5) indicative of a first financial deposit (6), which is remitted by the user (4), wherein the first control data (5) is referenced to at least one service request (1); and
Process the received first service request (3), if the received first control data (5) is referenced to the received first service request (3);
wherein the service provider node (2) is further **characterized in that**:
the control unit (17) is further adapted to dispense (270) a third control data (12) indicative of a third financial deposit (13) to the user (4) in response to receive (110, 210) the first control data (5) and based on an evaluation of a user criterion,
wherein the user criterion includes behaviors of the user (4), and the method (100, 210) further comprises analyzing the behaviors of the user (4).

14. The service provider node (2) of claim 13, which is adapted to perform the method (100, 200) according to any of claims 2 to 12.

## Patentansprüche

1. Verfahren (100, 200) zur Verarbeitung Dienstanforderungen (1) eines Dienstanbieterknotens (2), wobei das Verfahren (100, 200) umfasst:
Empfangen (120, 220) einer ersten Dienstanforderung (3), die von einem Benutzer übersendet wird (4);
Empfangen (110, 210) erster Steuerdaten (5), eine erste finanzielle Sicherheitsleistung (6) anzeigend, die von dem Benutzer (4) übersendet wird, wobei sich die ersten Steuerdaten (5) auf mindestens eine Dienstanforderung (1) beziehen; und
Verarbeiten (130, 230) der empfangenen ersten Dienstanforderung (3), falls sich die empfangenen ersten Steuerdaten (5) auf die empfangene erste Dienstanforderung (3) beziehen;
wobei das Verfahren (100, 200) **gekennzeichnet ist durch**:
Ausgeben (270) dritter Steuerdaten (12), die eine dritte finanzielle Sicherheitsleistung (13) an den Benutzer (4) als Reaktion auf das Empfangen (110, 210) der ersten Steuerdaten (5) anzeigen und auf einer Auswertung eines Benutzerkriteriums beruhen,
wobei das Benutzerkriterium das Verhalten des Benutzers (4) beinhaltet, und das Verfahren (100, 210) weiterhin das Analysieren des Verhaltens des Benutzers (4) umfasst.

2. Verfahren (100, 200) nach Anspruch 1, weiterhin umfassend das Speichern (135, 235) der empfangenen ersten Steuerdaten (5), falls sich die empfangenen ersten Steuerdaten (5) nicht auf die empfangene erste Dienstanforderung (3) beziehen.

3. Verfahren (100, 200) nach einem der Ansprüche 1 und 2, wobei das Empfangen (120, 220) der ersten Dienstanforderung (3) nach dem Empfangen (110, 210) der ersten Steuerdaten (5) erfolgt.

4. Verfahren (100, 200) nach einem der Ansprüche 1 und 2, wobei das Empfangen (120, 220) der ersten Dienstanforderung (3) und das Empfangen (110, 210) der ersten Steuerdaten (5) gleichzeitig erfolgt.

5. Verfahren (100, 200) nach Anspruch 4, weiterhin umfassend:
Empfangen (250) einer zweiten Dienstanforderung (7), die von dem Benutzer übersendet wird (4);
Empfangen (240) zweiter Steuerdaten (8), eine zweite finanzielle Sicherheitsleistung (9) anzeigend, die von dem Benutzer (4) übersendet wird, wobei sich die zweiten Steuerdaten (8) auf die mindestens eine Dienstanforderung (1) beziehen; und
Verarbeiten (260) der empfangenen zweiten Dienstanforderung (7), falls sich die empfangenen zweiten Steuerdaten (8) auf die empfangene zweite Dienstanforderung (7) beziehen,
wobei das Empfangen (250) der zweiten Dienstanforderung (7) und das Empfangen (240) der zweiten Steuerdaten (8) gleichzeitig erfolgen, und
wobei das Empfangen (110, 210, 240) der ersten Steuerdaten (5) und der zweiten Steuerdaten (8) durch ein Zeichen (10) ermöglicht werden, das vom Dienstanbieterknoten (2) dem Benutzer (4) als Reaktion auf eine vom Benutzer (4) zum Dienstanbieterknoten (2) vorgenommene kollektive finanzielle Überweisung (11) ausgegeben wird.

6. Verfahren (200) nach einem der Ansprüche 1 bis 5, wobei das Benutzerkriterium wenigstens eines von Folgendem umfasst:
a) mindestens eine vom Benutzer (4) übersendete Dienstanforderung (1), b) mindestens einen Anmeldeversuch durch den Benutzer (4), c) eine finanzielle Ressourceninformation des Benutzers (4).

7. Verfahren (200) nach einem der Ansprüche 1 bis 6, wobei die ersten Steuerdaten (5) und die dritten Steuerdaten (12) identisch sind.

8. Verfahren (200) nach Anspruch 5, weiterhin umfassend das Ausgeben (280) vierter Steuerdaten (14), die eine vierte finanzielle Sicherheitsleistung (15) an den Benutzer (4) als Reaktion auf das Empfangen (240) der zweiten Steuerdaten (8) anzeigen und auf einer Auswertung mindestens eines Benutzerkriteriums beruhen, wobei das Ausgeben (270, 280) der dritten Steuerdaten (12) und der vierten Steuerdaten (14) gleichzeitig erfolgt.

9. Verfahren (100, 200) nach einem der vorhergehenden Ansprüche, wobei das Empfangen (120, 220) der ersten Dienstanforderung (3) und das Empfangen (110, 210) der ersten Steuerdaten (5) durch eine Datenübertragung unter Verwendung einer verteilten Datenbank erfolgt.

10. Verfahren (100, 200) nach einem der Ansprüche 1 bis 8, wobei das Empfangen (120, 220) der ersten Dienstanforderung (3) und das Empfangen (110, 210) der ersten Steuerdaten (5) durch eine Datenübertragung unter Verwendung einer auf der Technik verteilter Kassenbücher (Distributed Ledger Technology) beruhenden Datenbank (16) ermöglicht wird.

11. Verfahren (100, 200) nach Anspruch 10, wobei die Verwendung der auf der Distributed Ledger Technology beruhenden Datenbank (16) das Zugreifen auf einen Smart Contract-Dienst umfasst.

12. Verfahren (100, 200) nach einem der Ansprüche 1 bis 8, wobei das Empfangen (120, 220) der ersten Dienstanforderung (3) und das Empfangen (110, 210) der ersten Steuerdaten (5) durch eine Datenübertragung unter Verwendung einer auf einem gerichteten azyklischen Graphen (Directed Acyclic Graph) beruhenden Datenbank (16) ermöglicht wird.

13. Dienstanbieterknoten (2), eingerichtet für Prozessdienstanforderungen (1) und umfassend eine Steuereinheit (17), eingerichtet für:
Empfangen einer ersten Dienstanforderung (3), die von einem Benutzer übersendet wird (4);
Empfangen erster Steuerdaten (5), eine erste finanzielle Sicherheitsleistung (6) anzeigend, die von dem Benutzer (4) übersendet wird, wobei sich die ersten Steuerdaten (5) auf mindestens eine Dienstanforderung (1) beziehen; und
Verarbeiten der empfangenen ersten Dienstanforderung (3), falls sich die empfangenen ersten Steuerdaten (5) auf die empfangene erste Dienstanforderung (3) beziehen;
wobei der Dienstanbieterknoten (2) weiterhin **dadurch gekennzeichnet ist, dass**:
die Steuereinheit (17) weiterhin dafür eingerichtet ist, dritter Steuerdaten (12) auszugeben (270), die eine dritte finanzielle Sicherheitsleistung (13) an den Benutzer (4) als Reaktion auf den Empfang (110, 210) der ersten Steuerdaten (5) anzeigen und auf einer Auswertung eines Benutzerkriteriums beruhen,
wobei das Benutzerkriterium das Verhalten des Benutzers (4) beinhaltet, und das Verfahren (100, 210) weiterhin das Analysieren des Verhaltens des Benutzers (4) umfasst.

14. Dienstanbieterknoten (2) nach Anspruch 13, dafür eingerichtet, das Verfahren (100, 200) nach einem der Ansprüche 2 bis 12 durchzuführen.

## Revendications

1. Un procédé (100, 200) de traitement de demandes de service (1) par un nœud de fournisseur de services (2), le procédé (100, 200) comprenant :
la réception (120, 220) d'une première demande de service (3), qui est remise par un utilisateur (4),
la réception (110, 210) de premières données de commande (5) indicatives d'un premier dépôt financier (6), qui est remis par l'utilisateur (4), les premières données de commande (5) étant référencées sur au moins une demande de service (1), et
le traitement (130, 230) de la première demande de service reçue (3) si les premières données de commande reçues (5) sont référencées sur la première demande de service reçue (3),
dans lequel le procédé (100, 200) est **caractérisé par** :
la distribution (270) de troisièmes données de commande (12) indicatives d'un troisième dépôt financier (13) à l'utilisateur (4) en réponse à la réception (110, 210) des premières données de commande (5) et en fonction d'une évaluation d'un critère d'utilisateur,
dans lequel le critère d'utilisateur comprend des comportements de l'utilisateur (4), et le procédé (100, 210) comprend en outre l'analyse des comportements de l'utilisateur (4).

2. Le procédé (100, 200) selon la revendication 1, comprenant en outre la conservation en mémoire (135, 235) des premières données de commande reçues (5) si les premières données de commande reçues (5) ne sont pas référencées sur la première demande de service reçue (3).

3. Le procédé (100, 200) selon l'une quelconque des revendications 1 et 2, dans lequel la réception (120, 220) de la première demande de service (3) est exécutée après la réception (110, 210) des premières données de commande (5) .

4. Le procédé (100, 200) selon l'une quelconque des revendications 1 et 2, dans lequel la réception (120, 220) de la première demande de service (3) et la réception (110, 210) des premières données de commande (5) sont exécutées simultanément.

5. Le procédé (100, 200) selon la revendication 4, comprenant en outre
la réception (250) d'une deuxième demande de service (7), qui est remise par l'utilisateur (4),
la réception (240) de deuxièmes données de commande (8) indicatives d'un deuxième dépôt financier (9), qui est remis par l'utilisateur (4), les deuxièmes données de commande (8) étant référencées sur la au moins une demande de service (1), et
le traitement (260) de la deuxième demande de service reçue (7) si les deuxièmes données de commande reçues (8) sont référencées sur la deuxième demande de service reçue (7),
dans lequel la réception (250) de la deuxième demande de service (7) et la réception (240) des deuxièmes données de commande (8) sont exécutées simultanément, et
dans lequel la réception (110, 210, 240) des premières données de commande (5) et des deuxièmes données de commande (8) est actionnée par un jeton (10) distribué à partir du nœud de fournisseur de services (2) à l'utilisateur (4) en réponse à un transfert financier collectif (11) exécuté par l'utilisateur (4) vers le nœud de fournisseur de services (2).

6. Le procédé (200) selon l'une quelconque des revendications 1 à 5, dans lequel le critère d'utilisateur comprend au moins un élément parmi a) au moins une demande de service (1) remise par l'utilisateur (4), b) au moins une tentative de connexion de l'utilisateur (4) et c) des informations de ressources financières de l'utilisateur (4) .

7. Le procédé (200) selon l'une quelconque des revendications 1 à 6, dans lequel les premières données de commande (5) et les troisièmes données de commande (12) sont identiques.

8. Le procédé (200) selon la revendication 5, comprenant en outre la distribution (280) de quatrièmes données de commande (14) indicatives d'un quatrième dépôt financier (15) à l'utilisateur (4) en réponse à la réception (240) des deuxièmes données de commande (8) en fonction d'une évaluation d'au moins un critère d'utilisateur, les distributions (270, 280) des troisièmes données de commande (12) et des quatrièmes données de commande (14) étant exécutées simultanément.

9. Le procédé (100, 200) selon l'une quelconque des revendications précédentes, dans lequel la réception (120, 220) de la première demande de service (3) et la réception (110, 210) des premières données de commande (5) sont actionnées par un transfert de données au moyen d'une base de données distribuée.

10. Le procédé (100, 200) selon l'une quelconque des revendications 1 à 8, dans lequel la réception (120, 220) de la première demande de service (3) et la réception (110, 210) des premières données de commande (5) sont actionnées par un transfert de données au moyen d'une base de données (16) en fonction d'une technologie de livre de compte distribuée.

11. Le procédé (100, 200) selon la revendication 10, dans lequel l'utilisation de la base de données (16) en fonction de la technologie de livre de compte distribuée comprend l'accès à un service de contrat intelligent.

12. Le procédé (100, 200) selon l'une quelconque des revendications 1 à 8, dans lequel la réception (120, 220) de la première demande de service (3) et la réception (110, 210) des premières données de commande (5) sont actionnées par un transfert de données au moyen d'une base de données (16) en fonction d'un graphe acyclique dirigé.

13. Un nœud de fournisseur de services (2) adapté de façon à traiter des demandes de service (1) et comprenant une unité de commande (17), qui est adaptée de façon à :
recevoir une première demande de service (3), qui est remise par un utilisateur (4),
recevoir des premières données de commande (5) indicatives d'un premier dépôt financier (6), qui est remis par l'utilisateur (4), les premières données de commande (5) étant référencées sur au moins une demande de service (1), et
traiter la première demande de service reçue (3) si les premières données de commande reçues (5) sont référencées sur la première demande de service reçue (3),
dans lequel le nœud de fournisseur de services (2) est **caractérisé en outre en ce que** :
l'unité de commande (17) est adaptée en outre de façon à distribuer (270) des troisièmes données de commande (12) indicatives d'un troisième dépôt financier (13) à l'utilisateur (4) en réponse à la réception (110, 210) des premières données de commande (5) et en fonction d'une évaluation d'un critère d'utilisateur,
le critère d'utilisateur comprenant des comportements de l'utilisateur (4), et le procédé (100, 210) comprenant en outre l'analyse des comportements de l'utilisateur (4).

14. Le nœud de fournisseur de services (2) selon la revendication 13, qui est adapté de façon à exécuter le procédé (100, 200) selon l'une quelconque des revendications 2 à 12.
